# EUROPEAN PATENT APPLICATION

(11) **EP 3 902 277 A1**
(43) Date of publication of application: **27.10.2021**
(21) Application number: 20739008.9
(22) Date of filing: 06.01.2020
(51) Int. Cl.: H04N 21/466, G06N 3/04, G06N 3/08, G06Q 30/02

(54) **METHOD FOR PROVIDING RECOMMENDED CONTENT LIST AND ELECTRONIC DEVICE ACCORDING THERETO**

(30) Priority: 07.01.2019 KR 20190001925
(71) Applicant: Samsung Electronics Co., Ltd., Suwon-si, Gyeonggi-do 16677 (KR)
(72) Inventor: AGARWAL, Vivek, Suwon-si, Gyeonggi-do 16677 (KR); GARG, Jatin, Suwon-si, Gyeonggi-do 16677 (KR); KOO, Jayoon, Suwon-si, Gyeonggi-do 16677 (KR); SEO, Dongjin, Suwon-si, Gyeonggi-do 16677 (KR); AHN, Kwanki, Suwon-si, Gyeonggi-do 16677 (KR); LEE, Keuntek, Suwon-si, Gyeonggi-do 16677 (KR)
(74) Representative: Taor, Simon Edward William
(86) International application number: PCT/KR2020/000184
(87) International publication number: WO 2020/145596

(57) **Abstract**

An electronic device according to an embodiment of the disclosure includes: a communicator; a memory storing one or more instructions; at least one processor configured to execute the one or more instructions stored in the memory to collect content metadata and user metadata from a plurality of different servers that provide content, obtain a content latent factor including information about similarities between pieces of the content based on characteristics of the content metadata, by using a first learning network model, obtain a user latent factor related to user preferred content information based on characteristics of the user metadata, by using a second learning network model, obtain a user preference score for the content based on the content latent factor and the user latent factor, by using a third learning network model, and provide a recommended content list based on the user preference score.

## Description

### TECHNICAL FIELD

The disclosed embodiments relate to a method and apparatus for providing a recommended content list, and more particularly, to a method and apparatus for providing a recommended content list based on user metadata and content metadata received from different servers.

### BACKGROUND ART

An artificial intelligence (Al) system is a computer system for implementing human-level intelligence. Unlike existing rule-based smart systems, the AI system is a system in which machines learn, judge, and become smarter. The more the AI system is used, the higher the recognition rate of the AI system becomes so that the AI system can understand a user's tastes more accurately. For this reason, typical rule-based smart systems are being gradually replaced by deep learning-based AI systems.

AI technology consists of machine learning (deep learning) and element technology based on the machine learning.

The machine learning is algorithm technology that itself classifies/learns the characteristics of input data. The element technology uses a machine learning algorithm such as deep learning to imitate a human brain's functions such as recognition and determination. The machine learning is composed of technical fields including linguistic comprehension, visual comprehension, inference/prediction, knowledge representation, motion control, etc.

Various applications of the AI technology are as follows. The linguistic comprehension is technology for recognizing and applying/processing human language/characters, and includes natural language processing, machine translation, a dialogue system, query response, voice recognition/synthesis, etc. The visual comprehension is technology for recognizing/processing objects as done in human vision, and includes object recognition, object tracking, image search, human recognition, scene understanding, spatial understanding, and image enhancement. The inference/prediction is technology for judging and logically inferring and predicting information, and includes knowledge/probability-based inference, optimization prediction, preference-based planning, recommendation, etc. The knowledge representation is technology for automatically processing human experience information with knowledge data, and includes knowledge construction (data creation/classification), knowledge management (use of data), etc. The motion control is technology for controlling autonomous driving of vehicles, motions of robots, etc., and includes motion control (navigation, collision avoidance, driving), operating control (behavior control), etc.

Recently, due to the propagation and technical development of electronic devices, an amount of content that is provided to electronic devices is increasing, and the kinds of provided content are also being diversified. For example, users use Internet-based video services such as Over The Top (OTT) services that provide various kinds of content, such as dramas or movies, through the Internet, as well as broadcast programs provided by a broadcast receiver such as a TV.

As described above, as the kinds and number of content that an electronic device can selectively receive and display are provided from various sources, users may have difficulties in selecting any one from among lots of content. Accordingly, a content recommendation method of enabling a user to quickly select desired content that he/she wants to watch through an electronic device is needed.

### DESCRIPTION OF EMBODIMENTS

### TECHNICAL PROBLEM

Embodiments of the disclosure are directed to a method of providing a recommended content list to enable a user to quickly and conveniently select desired content, and an electronic device therefor.

More specifically, the embodiments of the disclosure relate to a method of providing a recommended content list based on user metadata and content metadata provided from a plurality of different servers, and an electronic device therefor.

### SOLUTION TO PROBLEM

An electronic device according to an embodiment of the disclosure includes: a communicator; a memory storing one or more instructions; at least one processor configured to execute the one or more instructions stored in the memory to collect content metadata and user metadata from a plurality of different servers that provide content, obtain a content latent factor including information about similarities between pieces of the content based on characteristics of the content metadata, by using a first learning network model, obtain a user latent factor related to user preferred content information based on characteristics of the user metadata, by using a second learning network model, obtain a user preference score for the content based on the content latent factor and the user latent factor, by using a third learning network model, and provide a recommended content list based on the user preference score. Accordingly, because the electronic device can provide a recommended content list based on characteristics of content metadata and user metadata obtained from a plurality of sources, the electronic device may achieve higher accuracy than in the case of providing a recommended content list based on metadata obtained from one source.

Also, the processor may obtain, upon reception of a user input for preset content provided from a first server among the plurality of different servers, a user preference score for each piece of content provided from the first server by using the third learning network model, based on user metadata corresponding to the user. Accordingly, although no content viewing history information exists in the first server, the electronic device may provide a recommended content list based on content metadata and user metadata received from other sources.

Also, the content metadata may include a format for representing at least one piece of information among genre information, director information, casts information, time information, and content provider (CP) information.

Also, the processor may obtain the content latent factor having a N-dimensional vector format for each piece of content by using the first learning network model. Accordingly, the electronic device may determine similarities between pieces of content, based on characteristics of content metadata having different formats.

Also, the processor may map an index corresponding to the each piece of the content to the content latent factor. Accordingly, the electronic device may identify content corresponding to each content latent factor.

Also, the user metadata may include at least one of user content viewing history information or user preferred content information. Accordingly, the electronic device may determine content having a user preference satisfying preset criterion or higher based on the user metadata.

Also, the processor may obtain the user latent factor having a M-dimensional vector format based on characteristics of the user metadata, for each user, by using the second learning network model. Accordingly, the electronic device may obtain user indicators having the same format by using user metadata having different formats. Accordingly, the electronic device may provide a recommended content list including content that is similar to content watched by a user, based on a content viewing history included in user metadata.

Also, the processor may map an index corresponding to the user to the user latent factor. Accordingly, the electronic device may identify the user corresponding to the user latent factor, through the index.

Also, the processor may provide the recommended content list including a preset number of pieces of content in a descending order of high preferences, based on the user preference score. Accordingly, in the case in which a user's desired content does not exist in a recommended content list, the electronic device may increase the number of pieces of content to be recommended, through a user interface.

Also, the plurality of different servers may include at least one server of a broadcasting station server, an Over The Top (OTT) service providing server, and a streaming server. Accordingly, the electronic device may provide a recommended content list based on metadata received from various sources.

A method of operating an electronic device, according to an embodiment of the disclosure, includes: collecting content metadata and user metadata from a plurality of different servers that provide content; generating a content latent factor including information about similarities between pieces of the content based on characteristics of the content metadata, by using a first learning network model; generating a user latent factor related to user preferred content information based on characteristics of the user metadata, by using a second learning network model; obtaining a user preference score for each of the content based on the content latent factor and the user latent factor, by using a third learning network model; and providing a recommended content list based on the user preference score.

Also, the obtaining of the user preference score may include obtaining, upon reception of a user input for preset content provided from a first server among the plurality of different servers, the user preference score for each piece of content provided from the first server by using the third learning network model, based on user metadata corresponding to the user.

Also, the content metadata may include a format for representing at least one piece of information among genre information, director information, casts information, time information, and content provider (CP) information.

Also, the generating of the content latent factor may include generating the content latent factor having a N-dimensional vector format for each piece of content, by using the first learning network model,

Also, the generating of the content latent factor may include mapping an index corresponding to the each piece of the content to the content latent factor.

Also, the user metadata may include at least one of user content viewing history information or user preferred content information.

Also, the generating of the user latent factor may further include generating the user latent factor having a M-dimensional vector format based on characteristics of the user metadata, for each user, by using the second learning network model.

Also, the generating of the user latent factor may further include mapping an index corresponding to the user to the user latent factor.

Also, the providing of the recommended content list may include providing the recommended content list including a preset number of pieces of content in a descending order of high preferences, based on the user preference score.

Also, the plurality of different servers may include at least one server of a broadcasting station server, an Over The Top (OTT) service providing server, and a streaming server.

### ADVANTAGEOUS EFFECTS OF DISCLOSURE

A method of providing a recommended content list and an electronic device therefor, according to an embodiment of the disclosure, may preferentially recommend content with a high probability to be preferred by a user, based on user metadata and content metadata provided from a plurality of different servers.

Accordingly, the method of providing the recommended content list and the electronic device therefor, according to an embodiment of the disclosure, may enable a user to quickly and conveniently select desired content.

### BRIEF DESCRIPTION OF DRAWINGS

FIG. 1 illustrates a system for describing a content recommendation method according to some embodiments.
FIG. 2 illustrates a recommended content list providing screen according to some embodiments.
FIG. 3 is a flowchart illustrating a method of obtaining a content similarity indicator based on characteristics of content metadata, according to some embodiments.
FIG. 4 is a flowchart illustrating a method of obtaining a user indicator based on characteristics of user metadata, according to some embodiments.
FIG. 5 is a flowchart illustrating a method of providing a recommended content list, according to some embodiments.
FIG. 6 illustrates an example of obtaining user preference scores, which is performed by an electronic device, according to some embodiments.
FIG. 7 illustrates an example of obtaining user preference scores, which is performed by an electronic device, according to some embodiments.
FIG. 8 illustrates an example of obtaining a similarity indicator learning model, which is performed by an electronic device, according to some embodiments.
FIG. 9 illustrates an example of a similarity indicator learning model according to some embodiments.
FIG. 10 illustrates an example in which content indexes are mapped to a similarity indicator learning model, according to some embodiments.
FIG. 11 illustrates an example in which user indicators are mapped to a user indicator learning model, according to some embodiments.
FIG. 12 is a block diagram of an electronic device according to some embodiments.
FIG. 13 is a block diagram of a processor according to some embodiments.
FIG. 14 is a block diagram of a data trainer according to some embodiments.
FIG. 15 is a block diagram of a data recognizer according to some embodiments.
FIG. 16 is a detailed block diagram illustrating a configuration of an electronic device according to some embodiments.

### MODE OF DISCLOSURE

Hereinafter, embodiments of the disclosure will be described in detail with reference to the accompanying drawings so that the disclosure may be readily implemented by those skilled in the art. However, the disclosure is not limited to these embodiments of the disclosure, and may be embodied in various other forms. Also, for definite descriptions of the disclosure, portions irrelevant to descriptions are not shown in the drawings, and throughout the specification, similar components are assigned similar reference numerals.

In this specification, it will be understood that the case in which a certain portion is "connected" to another portion includes the case in which the portion is "electrically connected" to the other portion with another device in between, as well as the case in which the portion is "directly connected" to the other portion. Also, it will be understood that when a certain portion "includes" a certain component, the portion does not exclude another component but can further include another component, unless the context clearly dictates otherwise.

The phrases "in some embodiments" or "according to an embodiment" appearing in the present specification do not necessarily indicate the same embodiment.

Some embodiments may be represented by functional block configurations and various processing operations. The entire or a part of the functional blocks may be implemented with various numbers of hardware and/or software configurations to execute specific functions. For example, the functional blocks of the disclosure may be implemented with one or more processors or microprocessors, or with circuit configurations for predetermined functions. Also, for example, the functional blocks of the disclosure may be implemented with various programming or scripting languages. The functional blocks may be implemented with algorithms that are executed by one or more processors. Also, the disclosure may adopt typical technologies for electronic environment settings, signal processing, and/or data processing. The terms "module", "configuration", etc. can be broadly used, and are not limited to mechanical and physical configurations.

Also, connection lines or connection members between components shown in the drawings are examples of functional connections and/or physical or circuital connections. In an actual apparatus, the connections between the components may be implemented in the form of various functional connections, physical connections, or circuital connections that can be replaced or added.

The expression "at least one of A and B" indicates "A or B" or "A and B".

Hereinafter, the disclosure will be described in detail with reference to the accompanying drawings.

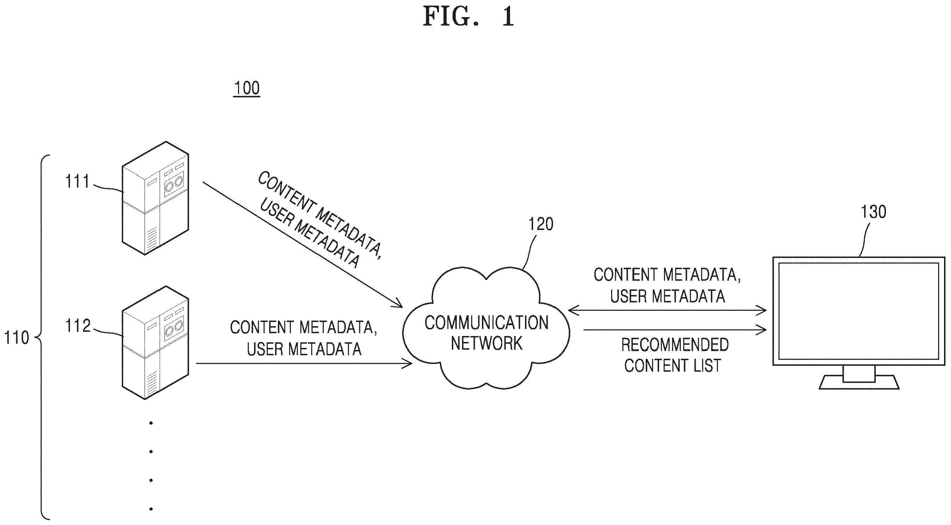

FIG. 1 illustrates a system for describing a content recommendation method according to some embodiments.

Referring to FIG. 1, a system 100 according to an embodiment of the disclosure may include a plurality of different servers 110, a communication network 120, and an electronic device 130.

The plurality of different servers 110 may include servers capable of communicating with the electronic device 130 through the communication network 120. More specifically, the plurality of different servers 110 may provide preset content to the electronic device 130 through the communication network 120, and provide content metadata corresponding to the provided content. Also, the plurality of different servers 110 may provide user metadata including user content viewing history or user preferred content information. Herein, the user preferred content information may be information determined by the user's rating or review about content which the user has viewed.

Referring to FIG. 1, the plurality of different servers 110 may include a first server 111 and a second server 112 that respectively provide different types of content. For example, the first server 111 and the second server 112 may correspond to at least ones of broadcasting station servers, Over The Top (OTT) service providing servers, or streaming servers. That is, the plurality of different servers 110 may mean different sources that provide content.

A broadcasting station server means a server that transmits content to the electronic device 130 through a preset channel. The preset channel may be a broadcasting channel, and a user using the electronic device 130 may select the preset channel to watch a broadcast program.

Also, a streaming server may provide a user with a Video on Demand (VoD) service and/or a streaming content providing service, etc. through the communication network 120. For example, in the case in which the electronic device 130 is a television (TV), a user may receive a preset streaming movie providing service through a channel '1'. In the case in which the user selects the channel '1' in the electronic device 130, the user may watch movie content provided from the preset streaming movie providing service.

Also, an OTT service providing server may be a server providing an OTT service, wherein the OTT service means a service providing various media content, such as dramas, movies, etc., through the Internet. Herein, Top means a set-top box connected to a TV. However, recently, OTT services are provided on electronic devices, such as Personal Computers (PCs), smart phones, etc., regardless of the presence/absence of set-top boxes, and may also include all Internet-based video services that are additionally provided by existing broadcasting companies or telecom companies.

The plurality of different servers 110 may provide content metadata or user metadata. Meanwhile, the plurality of different servers 110 may include a server that provides metadata, separately from the first and second servers 111 and 112 that provide content.

The electronic device 130 may receive content from the plurality of different servers 110 through the communication network 120, and store content metadata corresponding to the received content. Also, the electronic device 130 may store user metadata including user viewing history or user preferred content information. Accordingly, the electronic device 130 may provide a recommended content list, based on content metadata and user metadata stored in advance in a memory of the electronic device 130.

According to some embodiments, the plurality of different servers 110 may be connected to the electronic device 130 through the communication network 120. In this case, the communication network 120 may be a wired and/or wireless communication network. For example, the communication network 120 may be one of various communication networks including a Local Area Network (LAN), a Metropolitan Area Network (MAN), a Wide Area Network (WAN), or a World Wide Web (WWW).

The electronic device 130 according to some embodiment may be a computing device capable of reproducing content, and for example, the electronic device 130 may be a PC, a laptop computer, a mobile phone, a micro server, a global positioning system (GPS) device, a smart phone, a wearable terminal, an e-book terminal, a home appliance, an electronic device in a vehicle, or another mobile or non-mobile computing device. However, the electronic device 130 is not limited to the above-mentioned devices, and may include all kinds of devices including a communication function and a data processing function.

According to some embodiments, the electronic device 130 may depend on types of the plurality of different servers 110 that provide content. For example, in the case in which the first server 111 is a broadcasting station server, the electronic device 130 may be a broadcast receiver, that is, a TV, and, in the case in which the second server 112 is an OTT service providing server, the electronic device 130 may be a smart TV or a smart phone.

As described above, as the kinds and number of content that the electronic device 130 can selectively receive and display from the plurality of different servers 110 are increasing, a user may have difficulties in selecting one from among lots of content. Accordingly, a content recommendation method of enabling a user to quickly select desired content that he/she wants to watch through the electronic device 130 is needed.

A method of providing a recommended content list may be a method of recommending content that is similar to content watched by a user, based on user metadata including auser content viewing history and content metadata corresponding to the content watched by the user. In the case in which different sources provide content, there may be different methods of defining content metadata. Accordingly, a recommended content list may have a problem that it is applicable only to content provided from one source. For example, a recommended content list provided from a broadcasting station server may be applicable only to TV programs, and inapplicable to content provided from an OTT service providing server. That is, it is inconvenient that an OTT service cannot recommend content based on a user viewing history about content provided from a broadcasting station server.

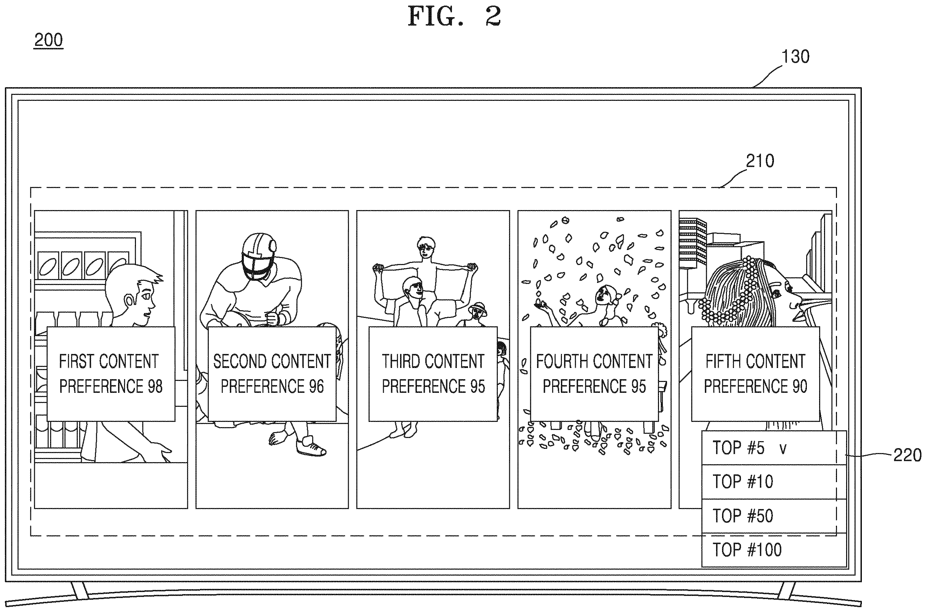

Hereinafter, a method of recommending content based on characteristics of content metadata and user metadata provided from different sources by using a learning network model, and an electronic device therefor will be described with reference to FIGS. 2 to 16.

FIG. 2 illustrates a recommended content list providing screen according to some embodiments. Referring to FIG. 2, a recommended content list providing screen 200 may be displayed on a display of the electronic device 130, and include a recommended content list 210 for a user.

Referring to FIG. 2, the recommended content list 210 may be a recommended content list provided from Netflix which is one of OTT service providing servers. More specifically, the electronic device 130 may collect user metadata and content metadata including auser content viewing history from OTT service providing sources (for example, NETFLIX, POOQ, Watcha, etc.). Also, the electronic device 130 may obtain user preference scores for individual pieces of content provided from Netflix by using a learning network model, based on user metadata and content metadata collected from a plurality of sources. Also, the electronic device 130 may provide the recommended content list 210 including a preset number of pieces of content in a descending order of high preferences, based on the user preference scores.

The electronic device 130 may provide a user interface 220 to enable the user to select the number of pieces of content that will be included in the recommended content list 210. However, a method of selecting the number of pieces of recommended content is not limited to this, and the number of pieces of recommended content may be automatically set by the learning network model.

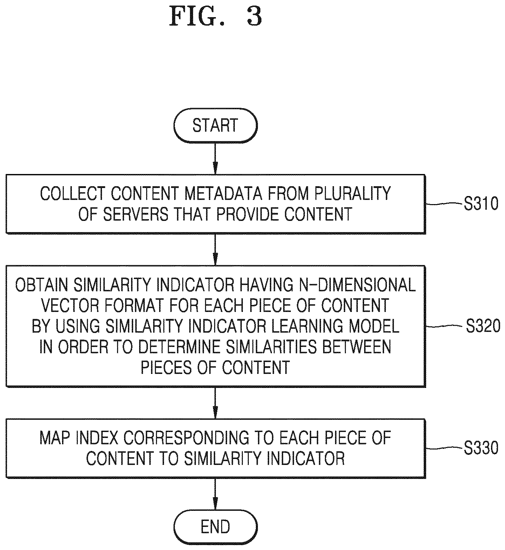

FIG. 3 is a flowchart illustrating a method of obtaining a content similarity indicator based on characteristics of content metadata, according to some embodiments.

In operation S310, the electronic device 130 may collect content metadata from a plurality of servers that provide content. The electronic device 130 may collect content metadata from other sources, as well as the servers that provide content. Also, when the content received from the plurality of sources is reproduced on the electronic device 130, content metadata may be stored in the electronic device 130. Therefore, the electronic device 130 may collect content metadata stored in advance in the memory.

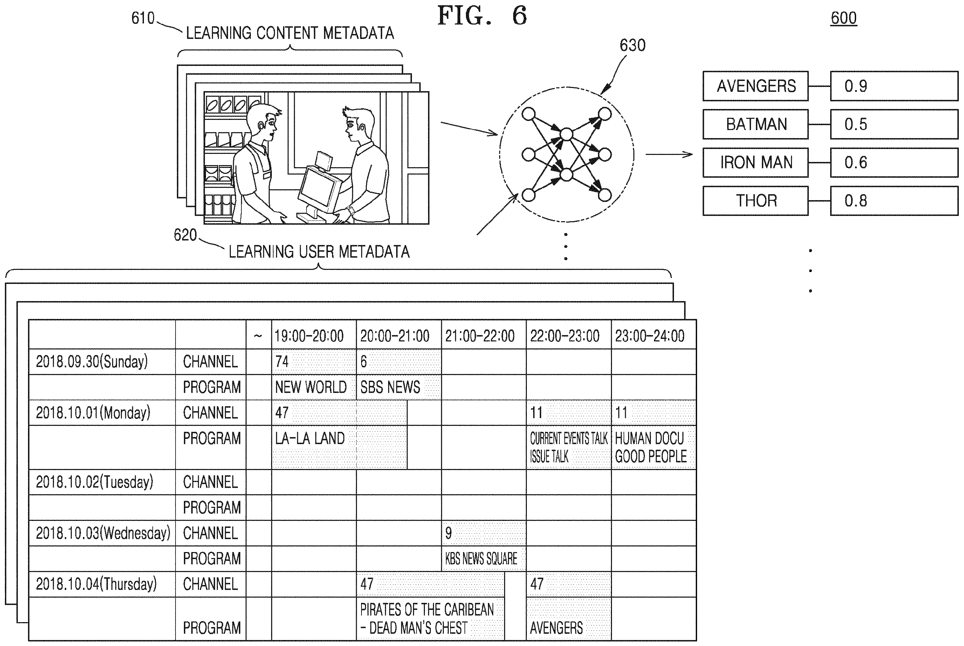

In operation S320, the electronic device 130 may obtain a similarity indicator having a N-dimensional vector format, that is, a latent factor for each piece of content by using a similarity indicator learning model, in order to determine similarities between pieces of content. More specifically, the electronic device 130 may convert content metadata having different formats into similarity indicators having the same format by using a learning network model. The electronic device 130 according to some embodiments of the disclosure may use the latent factor as a similarity indicator. The latent factor will be described in detail with reference to FIG. 6, later. Hereinafter, for convenience of description, a content latent factor is referred to as a content similarity indicator or a similarity indicator, and a user latent factor is referred to as a user indicator.

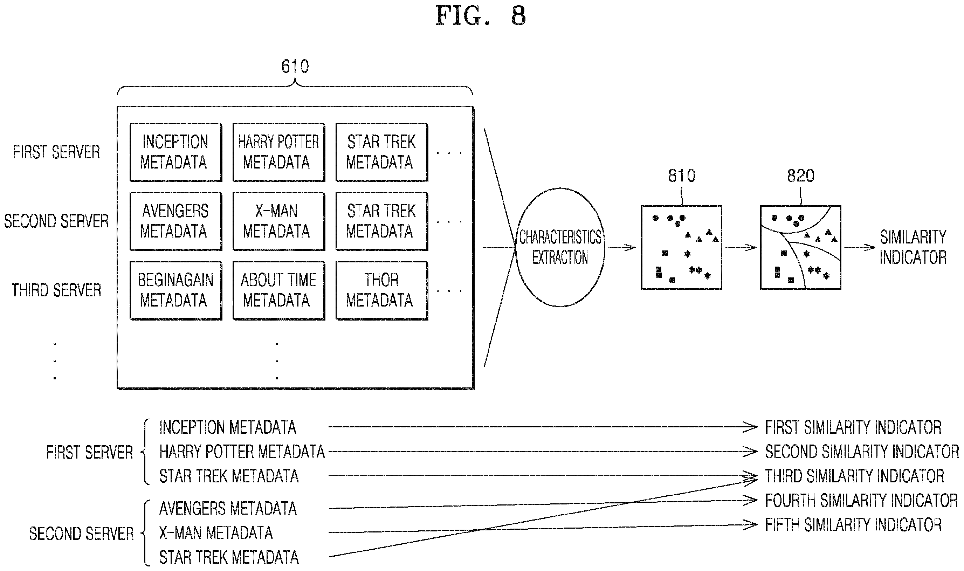

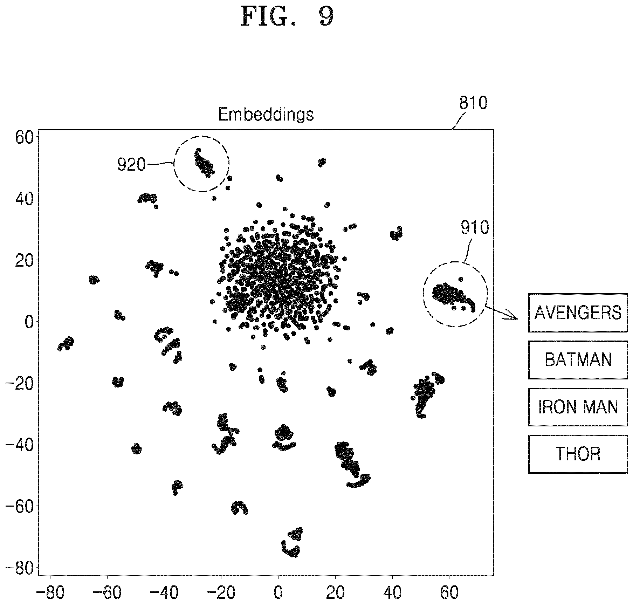

For example, the electronic device 130 may obtain a similarity indicator expressed as a N-dimensional vector for each piece of content, based on characteristics of information included in the content metadata. Operation S320 will be described in detail with reference to FIGS. 8 and 9, later.

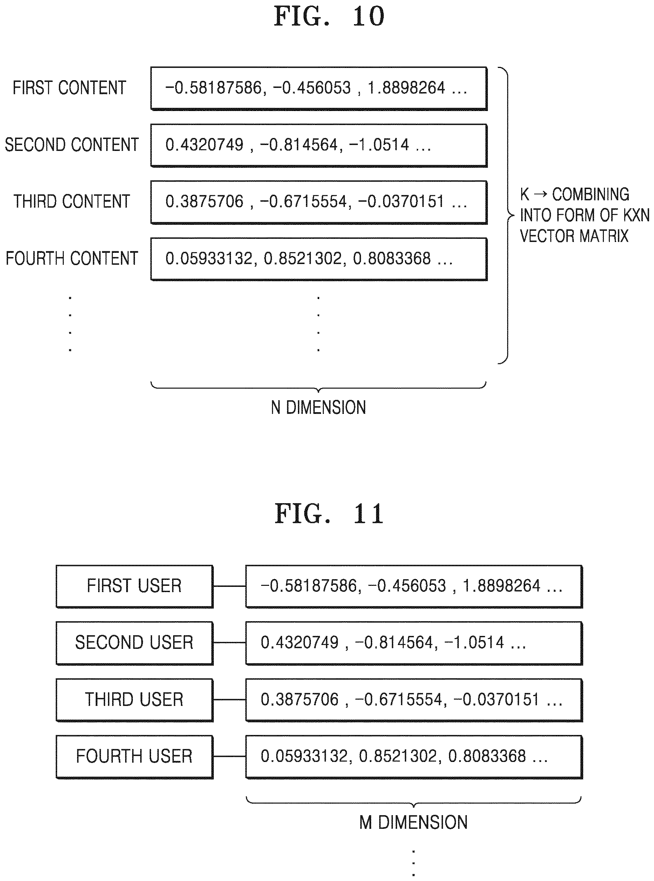

In operation S330, the electronic device 130 may map an index corresponding to each piece of content to a similarity indicator. More specifically, the electronic device 130 may map a similarity indicator obtained for each piece of content to an index for identifying the piece of content. For example, in the case in which the electronic device 130 receives content metadata about 'Avengers' from a terrestrial source and content metadata about 'Avengers' from an OTT service providing source, the electronic device 130 may obtain a similarity indicator corresponding to the content based on characteristics of the received content metadata. The electronic device 130 may map an index for identifying 'Avengers' to the similarity indicator. Operation S330 will be described in detail with reference to FIG. 10, later.

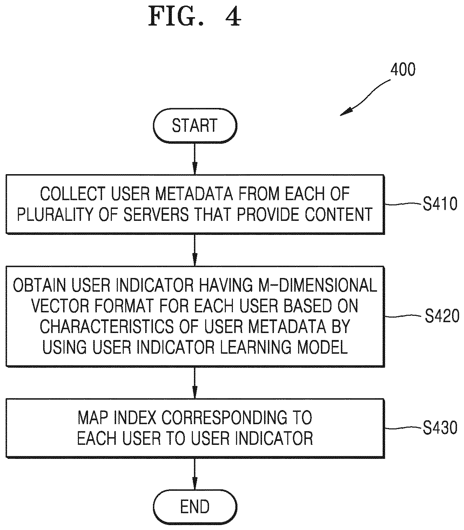

FIG. 4 is a flowchart illustrating a method of obtaining a user indicator based on characteristics of user metadata, according to some embodiments.

In operation S410, the electronic device 130 may collect user metadata from each of a plurality of servers that provide content. The electronic device 130 may collect user metadata from different sources provided separately, as well as servers that provide content. Also, according to some embodiments, when content received from a plurality of sources is reproduced on the electronic device 130, user metadata including a user content viewing history or user preferred content information may be stored in the electronic device 130. Accordingly, the electronic device 130 may collect user metadata stored in advance in the memory.

In operation S420, the electronic device 130 may obtain a user indicator, that is, a user latent factor having a M-dimensional vector format for each user based on characteristics of the user metadata, by using a user indicator learning model. More specifically, the electronic device 130 may convert user metadata having different formats into a user indicator having the same format, by using a learning network model. The electronic device 130 may obtain a user indicator expressed as a M-dimensional vector based on the characteristics of the user metadata, for each user. For example, the electronic device 130 may determine whether user metadata collected from an OTT service providing server and user metadata collected from a broadcasting station server are metadata about the same user, based on user information included in the user metadata, by using the user indicator learning model.

In operation S430, the electronic device 130 may map an index corresponding to each user to a user indicator. More specifically, the electronic device 130 may map an index (for example, a name, an identifier (ID), etc.) for identifying each user to a user indicator. According to some embodiments, a user indicator may include a component for identifying the corresponding user. Operation S430 will be described in detail with reference to FIG. 11.

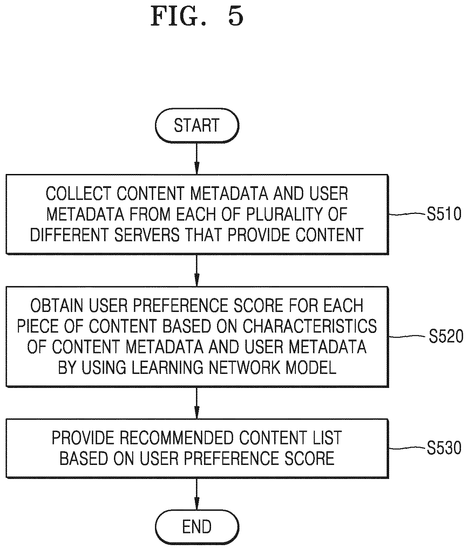

FIG. 5 is a flowchart illustrating a method of providing a recommended content list, according to some embodiments.

In operation S510, the electronic device 130 may collect content metadata and user metadata from each of a plurality of different servers that provide content. A method, performed by the electronic device 130, of collecting user metadata and content metadata has been described above with reference to FIGS. 1 to 4, and therefore, a detailed description thereof is omitted.

In operation S520, the electronic device 130 may obtain a user preference score for each piece of content, based on characteristics of the content metadata and user metadata, by using a learning network model. More specifically, the electronic device 130 may obtain a user preference score for each piece of content provided from a specific source, based on characteristics of user metadata and content metadata obtained from a plurality of sources.

In operation S530, the electronic device 130 may provide a recommended content list based on the user preference score. The electronic device 130 may provide a recommended content list including a preset number of content identifiers in a descending order of high user preferences, as described above with reference to FIG. 2.

FIG. 6 illustrates an example of obtaining user preference scores, which is performed by an electronic device according to some embodiments. More specifically, the electronic device 130 may obtain a user preference score 640 for each piece of content, based on input learning content metadata 610 and input learning user metadata 620, by using a learning network model 630.

Referring to FIG. 6, the electronic device 130 may input the learning content metadata 610 corresponding to content of a specific source to the learning network model 630. For example, in the case in which the specific source is Netflix which is one of OTT service providing servers, the electronic device 130 may use content metadata corresponding to content provided from Netflix as the learning content metadata 610. Also, in the case in which a user input for selecting certain content from Netflix is received, the electronic device 130 may collect the learning user metadata 620 corresponding to the user from different sources such as a broadcasting station server. Accordingly, although a user content viewing history does not exist in Netflix, the electronic device 130 may provide a recommended content list through Netflix based on a content viewing history provided from other sources. Meanwhile, in the case in which user metadata corresponding to the user exists in Netflix, the learning user metadata 620 may be provided from Netflix.

Referring to FIG. 6, the learning user metadata 620 may include the user content viewing history obtained for a preset time period. More specifically, the learning user metadata 620 may include information representing a history about channels and programs the user has actually watched in correspondence to a preset day of the week, a date, and a time for the preset time period and about viewing times of the channels or programs. Also, in FIG. 6, the case in which the preset time period is set to five days and user content viewing history for the five days is obtained is shown as an example, however, a time period for which a content viewing history is obtained may be set to another time period.

The learning user metadata 620 according to some embodiments may include user preferred content information. The content preference information may include the user's evaluation information about the content. More specifically, the content preference information may be obtained based on star review information or recommendation information (for example, clicks of 'like' on the content) which is the user's evaluation about the content. For example, content having the user's positive review or a high rating may be determined to be content highly preferred by the user.

Hereinafter, for convenience of description, a method of providing a recommended content list based on a content viewing history included in the learning user metadata 620 will be described. However, a method of providing a recommended content list based on the user preferred content information included in the learning user metadata 620 is also possible.

A parameter of each layer of a neural network configuring the learning network model 630 may be determined through learning, in order to apply a weight to characteristics used to obtain the user preference score 640 from the learning content metadata 610 and the learning user metadata 620.

For example, the electronic device 130 may apply a weight to characteristics used to obtain a high user preference score 640 with respect to content that is similar to 'Avengers' based on an 'Avengers' viewing history included in the input learning user metadata 620.

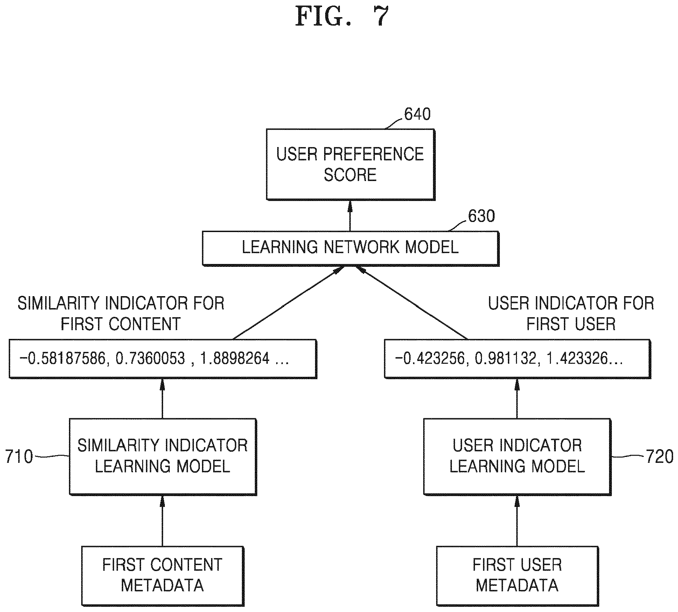

FIG. 7 illustrates an example of obtaining user preference scores, which is performed by an electronic device according to some embodiments.

Referring to FIG. 7, content metadata and first user metadata may be input to the learning network model 630. In this case, the electronic device 130 may obtain a similarity indicator corresponding to the content metadata by using a similarity indicator learning model 710. More specifically, the electronic device 130 may convert the content metadata into a preset vector format by using the similarity indicator learning model 710 to determine similarities between pieces of content to be distances between vectors. Operation, performed by the electronic device 130, of converting the content metadata into the preset vector format by using the similarity indicator learning model 710 will be described in detail with reference to FIGS. 8 to 10.

Also, according to some embodiments, the electronic device 130 may obtain a user indicator corresponding to the first user metadata by using a user indicator learning model 720. More specifically, the electronic device 130 may use the user indicator learning model 720 to convert the first user metadata into a vector indicating content that is similar to content included in a content viewing history included in the first user metadata, based on the content viewing history.

The electronic device 130 may obtain the user preference score 640 by using the learning network model 630, based on the similarity indicator corresponding to the content metadata and the user indicator corresponding to the first user metadata, obtained by the above-described operation.

FIG. 8 illustrates an example of obtaining a similarity indicator learning model, which is performed by the electronic device 130 according to some embodiment.

The electronic device 130 may collect the learning content metadata 610 from a plurality of different servers. Metadata means data for data, that is, structured data for preset data. Accordingly, content metadata may include structured data about attributes corresponding to the content. For example, the attributes of content may include items about a title, a scheduled time, a broadcasting time, a genre, casts, a director, and a broadcasting company (content provider) of the content. However, the above-mentioned items are only examples, and the attributes of content are not limited to the above-mentioned examples. The attributes of preset content may include other attributes as long as they are items capable of representing information about the preset content.

Data included in the learning content metadata 610 may have a tree structure, a table structure, or a combination of a tree structure and a table structure. The learning content metadata 610 may include a format for representing at least one piece of information among genre information, director information, casts information, time information, and content provider information. Accordingly, a structure of the learning content metadata 610 is not limited to the above-mentioned examples, and may have any format as long as it is capable of structuring data for content.

For convenience of description, a first server is assumed to be a Netflix server which is one of OTT service providing servers, and a second server is assumed to be a broadcasting station server.

According to some embodiments, the learning content metadata 610 may be metadata corresponding to content provided from the Netflix server. For example, the electronic device 130 may collect the learning content metadata 610 including 'Inception' metadata, 'Harry Potter' metadata, and 'Star Trek' metadata from the Netflix server.

Also, according to some embodiments, the learning content metadata 610 may be metadata corresponding to content provided from the broadcasting station server. For example, the electronic device 130 may collect learning content metadata including 'Avengers' metadata, 'X-Man' metadata, and 'Star Trek' metadata from the broadcasting station server.

In this case, the first server and the second server respectively being the Netflix server and the broadcasting station server may use different methods or formats of defining content metadata because the first server and the second server are different sources. For example, Netflix may define a genre of the content as action and adventure in the 'Star Trek' metadata, whereas the broadcasting station server may define the genre of the content as SF in the 'Star Trek' metadata. That is, different sources that provide metadata may define different kinds of metadata with respect to the same content. Also, as described above, different servers may define different formats of content metadata. Accordingly, the electronic device 130 cannot determine whether the 'Star Trek' metadata received from the first server and the 'Star Trek' metadata received from the second server are metadata corresponding to the same content 'Star Trek'.

Accordingly, according to some embodiments, the electronic device 130 may detect characteristics from the learning content metadata 610 by using a learning network model, and generate a characteristic space 810 configured with the detected characteristics. A relevance between characteristics distributed on the characteristic space 810 and characteristics of the learning content metadata 610 may be analyzed to train criterion 820. Referring to FIG. 8, the characteristic space 810 may be a three dimension or higher. However, in an embodiment of the disclosure, the characteristic space 810 resulting from reducing a dimension of a high-dimensional characteristic space into a two dimension is shown for convenience of description.

By repeatedly performing the above-described training process, the electronic device 130 may generate a similarity indicator learning model for obtaining a similarity indicator corresponding to each piece of content, in which characteristics of content metadata are considered.

Meanwhile, the electronic device 130 may apply, as input data, at least one piece of content metadata input to the similarity indicator learning model to thereby obtain a similarity indicator corresponding to the content metadata as output data. As such, the electronic device 130 may obtain a similarity indicator corresponding to each piece of content based on characteristics of content metadata, thereby determining similarities between pieces of content by using content metadata having different formats. However, characteristics input to the similarity indicator learning model are not limited to the above-described examples.

In the case in which no similarity indicator is applied, the electronic device 130 cannot determine whether the 'Star Trek' metadata provided from the first server and the 'Star Trek' metadata provided from the second server relate to the same content, because the metadata provided from the first server and the second server has different formats. However, as shown in FIG. 8, in the case in which a similarity indicator is applied, a similarity indicator obtained from the 'Star Trek' metadata provided from the first server may be identical to a similarity indicator obtained from the 'Star Trek' metadata provided from the second server, because the electronic device 130 obtains the similarity indicators based on the characteristics of the 'Star Trek' metadata provided from the first server and the 'Star Trek' metadata provided from the second server. Accordingly, the electronic device 130 may determine that the 'Star Trek' metadata provided from the first server and the 'Star Trek' metadata provided from the second server relate to the same content, by using the similarity indicators.

Also, according to some embodiments, the similarity indicators may be latent factors. A latent factor may be obtained by converting content metadata into a vector format having a preset dimension in order to determine similarities between pieces of content. More specifically, the electronic device 130 may obtain a latent factor for determining similarities between pieces of content, for each piece of content, by considering at least one of attributes of the content, such as a genre, a director, a time, casts, etc. of the content. However, the similarity indicators are not limited to latent factors, and may be any indexes based on which similarities between pieces of content are determined with respect to content metadata having different formats.

FIG. 9 illustrates an example of a similarity indicator learning model according to some embodiments. More specifically, FIG. 9 is a view obtained by reducing the dimension of the characteristic space 810 configured with characteristics detected from learning content metadata into two dimension.

The electronic device 130 may obtain a similarity indicator corresponding to each piece of content by using a learning network model. Herein, the similarity indicator may be a latent factor expressed as a N-dimensional vector. Accordingly, the electronic device 130 may determine similarities between pieces of content according to distances between similarity indicators corresponding to the individual pieces of content.

The similarity indicators may be clustered into a preset group according to the distance between the similarity indicators. More specifically, pieces of content corresponding to similarity indicators clustered into a first group 910 may be pieces of content having high similarities with respect to each other. For example, the first group 910 may include movies of action or fantasy genres, such as 'Avengers', 'Batman', 'Iron Man', 'Thor', etc., having a high relevance with respect to each other. Meanwhile, pieces of content corresponding to similarity indicators clustered into a second group 920 may include pieces of content having relatively low similarities with respect to the pieces of content corresponding to the first group 910. That is, pieces of content being at longer distances between similarity indicators may mean pieces of content having relatively lower similarities with respect to each other.

FIG. 10 illustrates an example in which content indexes are mapped to a similarity indicator learning model according to some embodiments.

Referring to FIG. 10, the electronic device 130 may obtain a similarity indicator having a N-dimensional vector format for each piece of content by using a similarity indicator learning model. For example, the electronic device 130 may obtain [-0.58187586, -0.456053, 1.8898264, ...] as first similarity indicators corresponding to first content. As such, the electronic device 130 may obtain second similarity indicators corresponding to second content, ..., k-th similarity indicators corresponding to k-th content. According to some embodiments, the electronic device 130 may map an index corresponding to each piece of content to a similarity indicator, in order to represent what content each similarity indicator corresponds to. Accordingly, the electronic device 130 may obtain a content similarity indicator in a form of a vector matrix of a k*N dimension obtained by combining k N-dimensional vectors. For example, the electronic device 130 may map a title of the first content or a unique ID to the first similarity indicator.

FIG. 11 illustrates an example in which user indicators are mapped to a user indicator learning model according to some embodiments.

User metadata may include at least one of user identification information, content preference information, or content viewing history information. In this case, different sources may provide user metadata having different formats. Accordingly, in the case in which user metadata is received from different sources, the electronic device 130 cannot determine similarities between pieces of content corresponding to content viewing histories included in the user metadata.

Referring to FIG. 11, the electronic device 130 may obtain a user indicator having a M-dimensional vector format, for each user, based on characteristics of user metadata received from a plurality of different servers, by using a user indicator learning model. For example, in the case in which user metadata for a first user is received from Netflix and a broadcasting station server, the electronic device 130 may obtain a user indicator corresponding to the first user based on characteristics of the received user metadata for the first user.

Referring to FIG.11, the electronic device 130 may generate a user indicator having a M-dimensional vector format for each user, and map an index capable of representing the user, such as an identifier, a name, and a unique number corresponding to the user, to the user indicator.

According to some embodiments, a user indicator may include information related to a user, such as the user's gender information, age information and job information, etc., as well as information about the user's preferred content and the user's content viewing history. Therefore, according to some embodiments, the electronic device 130 may provide a recommended content list for another user including information (for example, the same age group, the same job group, etc.) that is similar to information about the corresponding user, based on the user indicator.

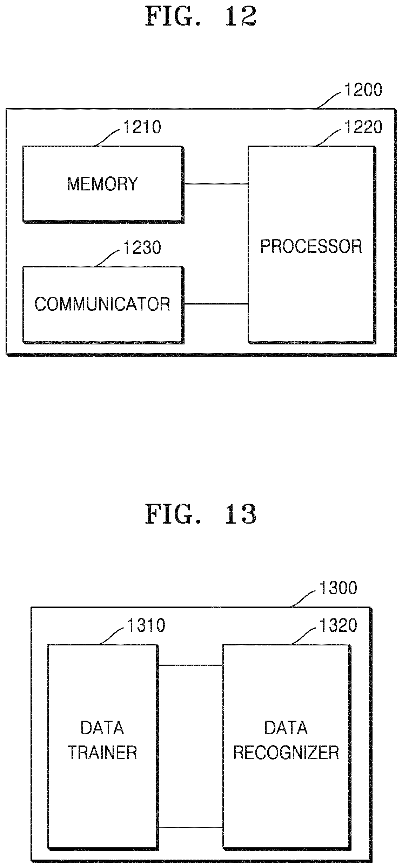

FIG. 12 is a block diagram of an electronic device 1200 according to some embodiments. The electronic device 1200 may correspond to the electronic device 130 described above with reference to FIGS. 1 to 11, and therefore, descriptions previously given above with reference to FIGS. 1 to 11 are omitted.

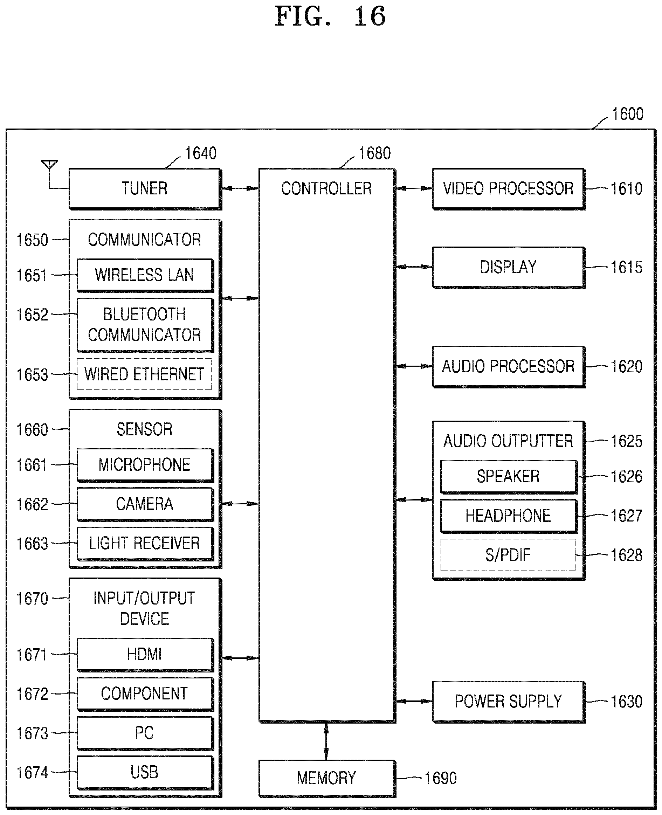

Referring to FIG. 12, the electronic device 1200 according to some embodiments may include a memory 1210, at least one processor 1220, and a communicator 1230. However, components shown in FIG. 12 may not be indispensable components of the electronic device 1200. The electronic device 1200 may be implemented with more components than those shown in FIG. 12 or less components than those shown in FIG. 12. For example, the electronic device 1200 according to some embodiments may include more components, as shown in FIG. 16.

The electronic device 1200 may include the communicator 1230 for communicating with a plurality of different servers, the memory 1210 storing one or more instructions, and the at least one processor 1220 for executing the one or more instructions stored in the memory 1210, wherein the at least one processor 1220 may collect user metadata and content metadata from the plurality of different servers that provide content, obtain a user preference score for each piece of content based on characteristics of the content metadata and the user metadata by using a learning network model, and provide a recommended content list based on the user preference information.

The processor 1220 may control overall operations of the electronic device 1200. More specifically, the processor 1220 may receive the content metadata and the user metadata from the plurality of different servers through the communicator 1230. Also, the processor 1220 may use content metadata and user metadata stored in advance in the memory 1210 of the electronic device 1200.

The processor 1220 may obtain a similarity indicator having a N-dimensional vector format for each piece of content by using a similarity indicator learning model, in order to determine similarities between pieces of content based on characteristics of the content metadata. Also, the processor 1220 may map an index corresponding to each piece of content to the similarity indicator.

Meanwhile, the processor 1220 may obtain a user indicator having a M-dimensional vector format for each user based on characteristics of the user metadata, by using a user indicator learning model based on the characteristics of the user metadata. Also, the processor 1220 may map an index corresponding to each user to the user indicator.

The plurality of different servers may include a first server. When a user input for preset content received from the first server is received, the processor 1220 may obtain a user preference score for each piece of content provided from the first server by using a learning network model based on user metadata corresponding to the user.

A case in which the first server is a Netflix source which is one of OTT service providing servers and a user is A is described as an example. In this case, the processor 1220 may receive a user input for watching preset content on Netflix.

The processor 1220 may obtain a similarity indicator for 'Avengers' by using a similarity indicator learning model generated in advance, based on characteristics of content metadata corresponding to 'Avengers' that can be provided on Netflix. Also, the processor 1220 may obtain a user indicator for the user A by using a user indicator learning model generated in advance, based on characteristics of user metadata corresponding to the user A.

The processor 1220 may obtain the user A's preference score for 'Avengers' by using a learning network model. In this way, the processor 1220 may obtain the user A's preference score for each of all pieces of content that can be provided on Netflix, in addition to 'Avengers'.

Also, the processor 1220 may provide a recommended content list based on the obtained user preference score. At this time, the processor 1220 may provide a recommended content list including a preset number of pieces of content in a descending order of high user preferences, based on the obtained user preference score.

FIG. 13 is a block diagram 1300 of the processor 1220 according to some embodiments.

Referring to FIG. 13, the processor 1220 according to some embodiments may include a data trainer 1310 and a data recognizer 1320.

The data trainer 1310 may train criterion for obtaining a user preference score for each piece of content based on characteristics of input user metadata and content metadata.

The data recognizer 1320 may determine a user preference score for each piece of content, based on the criterion trained by the data trainer 1310.

At least one of the data trainer 1310 and the data recognizer 1320 may be manufactured in a form of at least one hardware chip and mounted on an electronic device. For example, at least one of the data trainer 1310 and the data recognizer 1320 may be manufactured in a form of a dedicated hardware chip for artificial intelligence (Al), or manufactured as a part of an existing general purpose processor (for example, a central processing unit (CPU) or an application processor) or a graphic dedicated processor (for example, a graphic processing unit (GPU)) and mounted on various electronic devices described above.

In this case, the data trainer 1310 and the data recognizer 1320 may be mounted on one electronic device, or on separate electronic devices, respectively. For example, one of the data trainer 1310 and the data recognizer 1320 may be included in an electronic device, and the remaining one may be included in a server. Also, the data trainer 1310 and the data recognizer 1320 may provide information about a model established by the data trainer 1310 to the data recognizer 1320, and data input to the data recognizer 1320 may be provided as additional training data to the data trainer 1310, in a wired or wireless fashion.

Meanwhile, at least one of the data trainer 1310 and the data recognizer 1320 may be implemented as a software module. When at least one of the data trainer 1310 and the data recognizer 1320 is implemented as a software module (or a program module including an instruction), the software module may be stored in non-transitory computer readable media. Also, in this case, at least one software module may be provided by operating system (OS) or a preset application. Alternatively, some of at least one software module may be provided by OS, and the remaining part may be provided by a preset application.

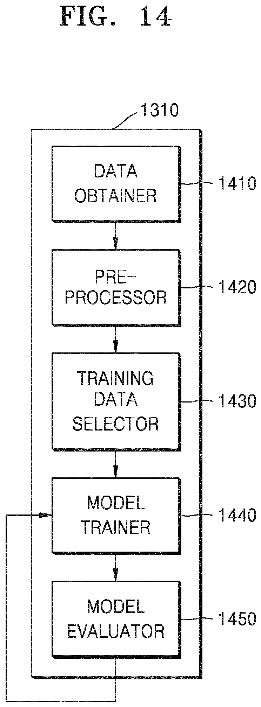

FIG. 14 is a block diagram of the data trainer 1310 according to some embodiments.

Referring to FIG. 14, the data trainer 1310 according to some embodiments may include a data obtainer 1410, a pre-processor 1420, a training data selector 1430, a model trainer 1440, and a model evaluator 1450. However, the above-mentioned components are an example. The data trainer 1310 may be configured with less components than the above-mentioned components, or another component except for the above-mentioned components may be additionally included in the data trainer 1310.

The data obtainer 1410 may obtain at least one piece of user metadata and content metadata received by the electronic device, as training data. For example, the data obtainer 1410 may obtain user metadata and content metadata received from a preset server, as training data.

The pre-processor 1420 may pre-process at least one received content metadata such that the at least one content metadata may be used for training for determining similarities between pieces of content based on characteristics of content metadata received from a plurality of different servers. Also, the pre-processor 1420 may pre-process at least one user metadata to be used for training for determining similarities between pieces of content included in a user viewing history, based on characteristics of user metadata received from a plurality of different servers, in order to obtain a user preference score for each piece of content. That is, the pre-processor 1420 may process at least one received content metadata and user metadata to a preset format such that the model trainer 1440 which will be described later may use the at least one received content metadata and user metadata for training.

The training data selector 1430 may select content metadata and user metadata required for training from among the pre-processed data. The selected content metadata and user metadata may be provided to the model trainer 1440. The training data selector 1430 may select the content metadata and user metadata required for training from among the pre-processed content metadata and user metadata, according to preset criterion.

The model trainer 1440 may train criterion for obtaining user preference scores for individual pieces of content, by using preset information among characteristics information of content metadata and user metadata in a plurality of layers in a learning network model. For example, the model trainer 1440 may train first criterion about which one of the plurality of layers included in the learning network model, from which characteristics information will be extracted and used, in order to obtain user preference scores for individual pieces of content. Herein, the first criterion may include kinds, numbers, levels, etc. of user metadata and content metadata characteristics used for the electronic device to obtain user preference scores for individual pieces of content by using the learning network model.

According to various embodiments, when a plurality of data recognition models established in advance exist, the model trainer 1440 may determine a data recognition model having a high relevance between input training data and basic training data to be a data recognition model to be trained. In this case, the basic training data may have been classified in advance according to types of data, and the data recognition models may have been established in advance according to the types of data. For example, the basic training data may have been classified in advance according to various criteria, such as regions where training data has been generated, times at which training data has been generated, sizes of training data, genres of training data, generators of training data, types of training data formats, etc.

Also, the model trainer 1440 may train the data recognition model through, for example, reinforcement learning of using a feedback about whether a user preference score for each piece of content, determined according to training, is correct.

Also, after the data recognition model is trained, the model trainer 1440 may store the trained data recognition model. In this case, the model trainer 1440 may store the trained data recognition model in a memory of an electronic device including the data recognizer 1420. Also, the model trainer 1440 may store the trained data recognition model in a memory of an electronic device including the data recognizer 1420 which will be described later. Also, the model trainer 1440 may store the trained data recognition model in a memory of a server connected to an electronic device through a wired or wireless network.

In this case, the memory in which the trained data recognition model is stored may store a command or data related to at least another component of the electronic) device, together. Also, the memory may store software and/or a program. The program may include, for example, a kernel, middleware, an application programming interface (API) and/or an application program (or "application").

The model evaluator 1450 may input evaluation data to the data recognition model, and, when a recognition result output from the evaluation data does not satisfy preset criterion, the model evaluator 1450 may cause the model trainer 1440 to again perform training. In this case, the evaluation data may be preset data for evaluating the data inference model. The evaluation data may include a concordance rate between a user preference score for each piece of content obtained based on the learning network model and the user's actual preference for the piece of content.

Meanwhile, in the case in which a plurality of learning network models exist, the model evaluator 1450 may evaluate whether each learning network model satisfies the preset criterion, and determine a learning network model satisfying the preset criterion to be a final learning network model.

Meanwhile, at least one of the data obtainer 1410, the pre-processor 1420, the training data selector 1430, the model trainer 1440, and the model evaluator 1450 in the data trainer 1310 may be manufactured in a form of at least one hardware chip and mounted on an electronic device. For example, at least one of the data obtainer 1410, the pre-processor 1420, the training data selector 1430, the model trainer 1440, and the model evaluator 1450 may be manufactured in a form of a dedicated hardware chip for Al, or manufactured as a part of an existing general purpose processor (for example, a CPU or an application processor) or a graphic dedicated processor (for example, a GPU) and mounted on various electronic devices described above.

Also, the data obtainer 1410, the pre-processor 1420, the training data selector 1430, the model trainer 1440, and the model evaluator 1450 may be mounted on one electronic device, or on separated electronic devices, respectively. For example, some of the data obtainer 1410, the pre-processor 1420, the training data selector 1430, the model trainer 1440, and the model evaluator 1450 may be included in an electronic device, and the remaining part may be included in a server.

Also, at least one of the data obtainer 1410, the pre-processor 1420, the training data selector 1430, the model trainer 1440, and the model evaluator 1450 may be implemented as a software module. When at least one of the data obtainer 1410, the pre-processor 1420, the training data selector 1430, the model trainer 1440, and the model evaluator 1450 is implemented as a software module (or a program module including an instruction), the software module may be stored in non-transitory computer readable media. Also, in this case, at least one software module may be provided by OS or a preset application. Alternatively, some of at least one software module may be provided by OS, and the remaining part may be provided by a preset application.

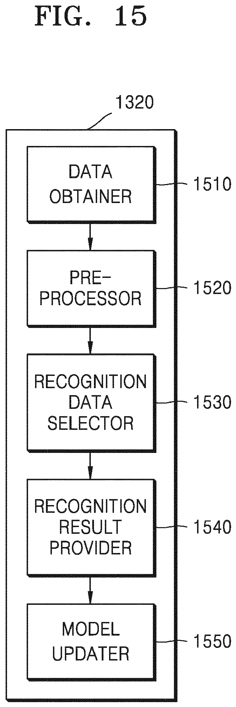

FIG. 15 is a block diagram of the data recognizer 1320 according to some embodiments.

Referring to FIG. 15, the data recognizer 1320 according to some embodiments may include a data obtainer 1510, a pre-processor 1520, a recognition data selector 1530, a recognition result provider 1540, and a model updater 1550.

The data obtainer 1510 may obtain at least one user metadata and content metadata required for obtaining a user preference score for each piece of content, and the pre-processor 1520 may pre-process at least one received user metadata and content metadata to obtain the user preference score for each piece of content. The pre-processor 1520 may process the received user metadata and content metadata to a preset format such that the recognition result provider 1540 which will be described later may use the user metadata and content metadata to obtain the user preference score for the corresponding content. The recognition data selector 1530 may select user metadata and content metadata required for obtaining the user preference score for each piece of content, from among the pre-processed data. The selected user metadata and content metadata may be provided to the recognition result provider 1540.

The recognition result provider 1540 may apply the selected user metadata and content metadata to a learning network model according to an embodiment to obtain the user preference score for each piece of content.

The recognition result provider 1540 may provide the user preference score for at least one user metadata and content metadata.

The model updater 1550 may provide information about evaluation of the user preference score corresponding to each piece of content, the user preference score provided from the recognition result provider 1540, to the model trainer 1440 described above with reference to FIG. 14, such that a classification network included in the learning network model, a parameter of at least one characteristic extraction layer, etc. are updated based on the evaluation of the user preference score.

Meanwhile, at least one of the data obtainer 1510, the pre-processor 1520, the recognition data selector 1530, the recognition result provider 1540, and the model updater 1550 in the data recognizer 1320 may be manufactured in a form of at least one hardware chip and mounted on an electronic device. For example, at least one of the data obtainer 1510, the pre-processor 1520, the recognition data selector 1530, the recognition result provider 1540, and the model updater 1550 may be manufactured in a form of a dedicated hardware chip for Al, or manufactured as a part of an existing general purpose processor (for example, a CPU or an application processor) or a graphic dedicated processor (for example, a GPU) and mounted on various electronic devices described above.

Also, the data obtainer 1510, the pre-processor 1520, the recognition data selector 1530, the recognition result provider 1540, and the model updater 1550 may be mounted on one electronic device, or on separated electronic devices, respectively. For example, some of the data obtainer 1510, the pre-processor 1520, the recognition data selector 1530, the recognition result provider 1540, and the model updater 1550 may be included in an electronic device, and the remaining part may be included in a server.

Also, at least one of the data obtainer 1510, the pre-processor 1520, the recognition data selector 1530, the recognition result provider 1540, and the model updater 1550 may be implemented as a software module. When at least one of the data obtainer 1510, the pre-processor 1520, the recognition data selector 1530, the recognition result provider 1540, and the model updater 1550 is implemented as a software module (or a program module including an instruction), the software module may be stored in non-transitory computer readable media. Also, in this case, at least one software module may be provided by OS or a preset application. Alternatively, some of at least one software module may be provided by OS, and the remaining part may be provided by a preset application.

FIG. 16 is a detailed block diagram illustrating a configuration of an electronic device 1600 according to some embodiments. The electronic device 1600 may correspond to the electronic device 130 or the electronic device 1200 described above with reference to FIGS. 1 to 15.

Referring to FIG. 16, the electronic device 1600 according to an embodiment may include a memory 1690, a controller 1680, and a communicator 1650 respectively corresponding to the memory 1210, the processor 1220, and the communicator 1230 of the electronic device 1200. The controller 1680 according to some embodiments may include at least one of the processor 1220 of FIG. 12, and therefore, descriptions previously given above with reference to FIG. 12 are omitted.

Also, referring to FIG. 16, the electronic device 1600 may include a video processor 1610, a display 1615, an audio processor 1620, an audio outputter 1625, a power supply 1630, a tuner 1640, the communicator 1650, a sensor 1660, an input/output device 1670, the controller 1680, and the memory 1690.

The display 1615 may display video included in a broadcasting signal received through the tuner 1640, on a screen, by a control of the controller 1680. Also, the display 1615 may display content (for example, moving images) received through the communicator 1650 or the input/output device 1670.

Also, the display 1615 may output an image stored in the memory 1670 by a control of the controller 1680. Also, the display 1615 may display a voice user interface (Ul) (for example, including a voice instruction guide) for performing a voice recognition task corresponding to voice recognition, or a motion UI (for example, including a user motion guide for motion recognition) for performing a motion recognition task corresponding to motion recognition.

The display 1615 may display and output information processed by the electronic device 1600. More specifically, the display 1615 may display a recommended content list based on a user preference score. Also, the display 1615 may display and output information processed by the electronic device 1600. In the case in which the display 1615 and a touch pad form a layer structure to be configured as a touch screen, the display 1615 may be used as an input device, as well as an output device.

The audio outputter 1625 may output audio data received through the communicator 1650 or stored in the memory 1690. Meanwhile, in the case in which a recommended content list is provided in a form of voice data, the audio outputter 1625 may output the recommended content list.

The audio outputter 1625 may output audio included in a broadcasting signal received through the tuner 1640 by a control of the controller 1680. The audio outputter 1625 may output audio (for example, a voice or sound) received through the communicator 1650 or the input/output device 1670. Also, the audio outputter 1625 may output audio stored in the memory 1690 by a control of the controller 1680. The audio outputter 1625 may include at least one of a speaker 1626, a headphone output terminal 1627, or a Sony/Philips Digital Interface (S/PDIF) output terminal 1628. The audio output unit 1625 may include a combination of the speaker 1626, the headphone output terminal 1627, and the S/PDIF output terminal 1628.

The power supply 1630 may supply power received from an external power source to the internal components 1610 to 1690 of the electronic device 1600 by a control of the controller 1680. Also, the power supply 1630 may supply power output from one or more batteries (not shown) located inside the electronic device 1600 to the internal components 1610 to 1690 by a control of the controller 1680.

The tuner 1640 may tune and select only a frequency of a channel which the electronic device 1600 attempts to receive, from among many electromagnetic wave components, through amplification, mixing, resonance, etc. of broadcasting signals received in a wired or wireless fashion. The broadcasting signal may include audio, video, and additional information (for example, Electronic Program Guide (EPG)).

The tuner 1640 may receive a broadcasting signal in a preset frequency band according to an external input (for example, a received control signal which is an external input, such as a high-definition multimedia interface (HDMI), a digital visual interface (DVI), or a display port (DP)). Herein, the external input may be a control signal received from an external control device (not shown), a remote controller (not shown), etc., wherein the control signal may be, for example, a channel number input, a channel up-down input, and a channel input onto an EPG screen.

The tuner 1640 may receive a broadcasting signal from various sources, such as terrestrial broadcasting, cable broadcasting, satellite broadcasting, and internet broadcasting. The tuner 1640 may receive a broadcasting signal from a source, such as analog broadcasting or digital broadcasting. The broadcasting signal received through the tuner 1640 may be decoded (for example, audio decoding, video decoding, or additional information decoding) to be separated into audio, video, and/or additional information. The separated audio, video, and/or additional information may be stored in the memory 1690 under a control of the controller 1680.

The tuner 440 of the electronic device 1600 may be a single tuner or a plurality of tuners. According to an embodiment, in the case in which the tuner 1640 is a plurality of tuners, the plurality of tuners may output a plurality of broadcasting signals to a plurality of windows configuring a multi-window screen provided on the display 1615.

The tuner 1640 may be implemented as an all-in-one with the electronic device 1600, a separate apparatus (for example, a set-top box (not shown)) having a tuner electrically connected to the electronic device 1600, or a tuner (not shown) connected to the input/output device 1670.

The communication device 1650 may connect the electronic device 1600 to an external device (for example, an audio system) by a control of the controller 1680. The controller 1680 may transmit/receive preset content or preset information, such as user metadata or content metadata, to/from the external device connected through the communicator 1650, download an application from the external device, or perform web-browsing. More specifically, the controller 1680 may be connected to a network through the communicator 1650, and receive content metadata or user metadata from an external device (not shown).

As described above, the communicator 1650 may include at least one of a short-range communication module (not shown), a wired communication module (not shown), and a mobile communication module (not shown).

In FIG. 16, a case in which the communicator 1650 includes one of a wireless local area network (WLAN) 1651, Bluetooth 1652, and wired Ethernet 1653 is shown as an example.

Also, the communicator 1650 may include a combination of the WLAN 1651, the Bluetooth 1652, and the wired Ethernet 1653. Also, the communicator 1650 may receive a control signal of a control device (not shown) by a control of the controller 1680. The control signal may be implemented as a Bluetooth type, a radio frequency (RF) signal type, or a Wi-Fi type.

The communication device 1650 may further include another short-range communication (for example, near field communication (NFC, not shown) or Bluetooth Low Energy (BLE)) than Bluetooth.

Also, the tuner 1640 and the communicator 1650 of FIG. 16 may correspond to the communicator 1230 of FIG. 12, and the communicator 1650 may be implemented as a configuration of further including the tuner 1640.

The sensor 1660 may sense a user's voice, a user's image, or a user's interaction.

The microphone 1661 may receive a voice uttered from a user. The microphone 1661 may convert the received voice to an electrical signal, and output the electrical signal to the controller 1680. The user's voice may include, for example, a voice corresponding to a menu or function of the electronic apparatus 1600. For example, a recognition range of the microphone 1661 may be recommended to be a range of 4 m or less as measured from the microphone 1661 to a user's location. However, the recognition range of the microphone 1661 may vary depending on a user's voice volume and a surrounding environment (for example, speaker sound or ambient noise).

The microphone 1661 may implemented as an integral type integrated into the electronic device 1600 or a separated type separated from the electronic device 1600. The microphone 1661 separated from the electronic device 1600 may be electrically connected to the electronic device 1600 through the communicator 1650 or the input/output device 1670.

It will be easily understood by one of ordinary skill in the art that the microphone 1661 can be omitted according to the performance and structure of the electronic device 1600.

A camera 1662 may receive an image (for example, successive frames) corresponding to a user's motion including a gesture made within a camera recognition range. For example, a recognition range of the camera 1662 may be a range of 0.1 m to 5 m as measured from the camera 1662 to the user. The user's motion may include the user's body part, such as the user's face, the user's expression, the user's hand, the user's fist, or the user's finger, or a motion of the user's body part. The camera 1662 may convert the received image into an electrical signal according to a control of the controller 1680, and output the electrical signal to the controller 1680.

The controller 1680 may select a menu displayed on the electronic device 1600 using the result of recognition of the received motion, or perform control corresponding to the result of the motion recognition. For example, channel adjustment, volume adjustment, or an indicator movement may be performed.

The camera 1662 may be configured with a lens (not shown) and an image sensor (not shown). The camera 1662 may support optical zoom or digital zoom using a plurality of lenses and image processing. The recognition range of the camera 1662 may be set variously according to an angle of the camera 1662 and an ambient environment condition. In the case in which the camera 162 is configured with a plurality of cameras, the plurality of cameras may be used to receive a 3Dimensional (3D) still image or a 3D motion.

The camera 1662 may be implemented as an integral type integrated into the electronic device 1600 or a separated type separated from the electronic device 1600. A separate apparatus (not shown) including the separated type of the camera 1662 may be electrically connected to the electronic device 1600 through the communicator 1650 or the input/output device 1670.

It will be easily understood by one of ordinary skill in the art that the camera 1662 can be omitted according to the performance and structure of the electronic device 1600.

A light receiver 1663 may receive an optical signal (including a control signal) from an external control device (not shown) through a light window (not shown) of the bezel of the display 1615. The light receiver 1663 may receive an optical signal corresponding to a user's input (for example, a touch, pressing, a touch gesture, voice, or a motion) from a control device (not shown). A control signal may be extracted from the received optical signal by a control of the controller 1680.

For example, the light receiver 1663 may receive a signal corresponding to a pointing location of the control device (not shown), and transmit the signal to the controller 1680. For example, a user interface screen for receiving data or a command from a user may be output through the display 1615, and, in the case in which a user tries to input data or a command to the electronic device 1600 through a control device (not shown), the user may move the control device (not shown), while contacting a touch pad (not shown) provided on the control device (not shown) with his/her finger. In this case, the light receiver 1663 may receive a signal corresponding to the movement of the control device (not shown) and transmit the signal to the controller 1680. Also, the light receiver 1663 may receive a signal representing that a specific button provided on the control device (not shown) has been pressed, and transmit the signal to the controller 1680. For example, in the case in which a user presses a touch pad (not shown) provided as a button type on the control device (not shown) with his/her finger, the light receiver 1663 may receive a signal representing that the button type touch pad has been pressed, and transmit the signal to the controller 1680. For example, the signal representing that the button type touch pad (not shown) has been pressed may be used as a signal for selecting one of items.

The input/output device 1670 may receive video (for example, moving images, etc.), audio (for example, a voice, music, etc.), and additional information (for example, EPG, etc.) from the outside of the electronic device 1600 by a control of the controller 1680. The input/output device 1670 may include one of a HDMI port 1671, a component jack 1672, a PC port 1673, and a USB port 1674. Also, the input/output device 1670 may include a combination of the HDMI port 1671, the component jack 1672, the PC port 1673, and the USB port 1674.

It will be easily understood by one of ordinary skill in the art that the configuration and operation of the input/output device 1670 can be implemented variously according to embodiments of the disclosure.

The controller 1680 may perform functions of controlling overall operations of the electronic device 1600 and signal flow between the internal components (not shown) of the electronic device 1600, and processing data. In the case in which a user's input is received or a condition set in advance and stored is satisfied, the controller 1680 may execute OS and various applications stored in the memory 1690.

The controller 1680 may include RAM (not shown) that stores signals or data received from an outside of the electronic device 1600 or is used as a storage area corresponding to various tasks performed by the electronic device 1600, ROM (not shown) storing a control program for controlling the electronic device 100a, and a processor (not shown).

The processor (not shown) may include a GPU (not shown) for processing graphics corresponding to video. The processor (not shown) may be implemented as System on Chip (SoC) into which a core (not shown) and a GPU (not shown) are integrated. The processor (not shown) may include a single core, a dual core, a triple core, a quad core, and a multiple core.

Also, the processor (not shown) may include a plurality of processors. For example, the processor (not shown) may be implemented with a main processor (not shown) and a sub processor (not shown) operating in a sleep mode.

The graphic processor 2284 may create a screen including various objects, such as an icon, an image, text, etc., by using a calculator (not shown) and a rendering device (not shown). The calculator may calculate attribute values, such as coordinate values, shapes, sizes, colors, etc., of individual objects according to a layout of a screen by using a user interaction sensed through a sensor (not shown). The rendering device may create screens of various layouts including the objects, based on the attribute values calculated by the calculator. The screens created by the rendering device may be displayed on a display area of the display 1615.

Meanwhile, the configuration of the electronic device 1600 shown in FIG. 16 may be an embodiment, and individual components of the electronic device 1600 may be integrated, other components may be added, or some of the components may be omitted, according to a specification of a terminal that is implemented. That is, two or more components may be integrated into a single component or a single component may be divided into two or more components, as necessary. Also, functions performed by individual configurations (or modules) are provided to describe embodiments, and detailed operations or devices will not limit the scope of the disclosure.

## Claims

1. An electronic device comprising:
a communicator;
a memory storing one or more instructions;
at least one processor configured to execute the one or more instructions stored in the memory to
collect content metadata and user metadata from a plurality of different servers that provide content,
obtain a content latent factor including information about similarities between pieces of the content based on characteristics of the content metadata, by using a first learning network model,
obtain a user latent factor related to user preferred content information based on characteristics of the user metadata, by using a second learning network model,
obtain a user preference score for the content based on the content latent factor and the user latent factor, by using a third learning network model, and
provide a recommended content list based on the user preference score.

2. The electronic device of claim 1, wherein the processor is further configured to execute the one or more instructions to obtain, upon reception of a user input for preset content provided from a first server among the plurality of different servers, the user preference score for each piece of content provided from the first server by using the third learning network model, based on user metadata corresponding to the user.

3. The electronic device of claim 1, wherein the content metadata includes a format for representing at least one piece of information among genre information, director information, cast information, time information, and content provider (CP) information.

4. The electronic device of claim 1, wherein the processor is further configured to execute the one or more instructions to
obtain the content latent factor having a N-dimensional vector format for each piece of content by using the first learning network model, and
mapping an index corresponding to the each piece of the content to the content latent factor.

5. The electronic device of claim 1, wherein the user metadata includes at least one of user content viewing history information or user preferred content information.

6. The electronic device of claim 4, wherein the processor is further configured to execute the one or more instructions to obtain the user latent factor having a M-dimensional vector format based on characteristics of the user metadata, for each user, by using the second learning network model, and map an index corresponding to the user to the user latent factor.

7. The electronic device of claim 1, wherein the processor is further configured to execute the one or more instructions to provide the recommended content list including a preset number of pieces of content in a descending order of high preferences, based on the user preference score.

8. The electronic device of claim 1, wherein the plurality of different servers include at least one server of a broadcasting station server, an Over The Top (OTT) service providing server, and a streaming server.

9. A method of operating an electronic device, the method comprising:
collecting content metadata and user metadata from a plurality of different servers that provide content;
generating a content latent factor including information about similarities between pieces of the content based on characteristics of the content metadata, by using a first learning network model;
generating a user latent factor related to user preferred content information based on characteristics of the user metadata, by using a second learning network model;
obtaining a user preference score for each of the content based on the content latent factor and the user latent factor, by using a third learning network model; and
providing a recommended content list based on the user preference score.

10. The method of claim 9, wherein the obtaining of the user preference score comprises obtaining, upon reception of a user input for preset content provided from a first server among the plurality of different servers, the user preference score for each piece of content provided from the first server by using the third learning network model, based on user metadata corresponding to the user.

11. The method of claim 9, wherein the content metadata includes a format for representing at least one piece of information among genre information, director information, cast information, time information, and content provider information.

12. The method of claim 9, wherein the generating of the content latent factor further comprises:
generating the content latent factor having a N-dimensional vector format for each piece of content, by using the first learning network model; and
mapping an index corresponding to the each piece of the content to the content latent factor.

13. The method of claim 9, wherein the user metadata comprises at least one of user content viewing history information or user preferred content information.

14. The method of claim 12, wherein the generating of the user latent factor further comprises:
generating the user latent factor having a M-dimensional vector format based on characteristics of the user metadata, for each user, by using the second learning network model; and
mapping an index corresponding to the user to the user latent factor.

15. The method of claim 11, wherein the plurality of different servers include at least one server of a broadcasting station server, an Over The Top (OTT) service providing server, and a streaming server.
